# EUROPEAN PATENT APPLICATION

(11) **EP 1 604 596 A1**
(43) Date of publication of application: **14.12.2005**
(21) Application number: 05076363.0
(22) Date of filing: 10.06.2005
(51) Int. Cl.: A47J 37/08

(54) **Toaster**

(30) Priority: 10.06.2004 AU 2004903115
(71) Applicant: Khoury, Edward Joseph, Perth WA 6150 (AU)
(72) Inventor: Khoury, Edward Joseph, Perth WA 6150 (AU)
(74) Representative: Galgut, John

(57) **Abstract**

A pop-up toaster incorporating a carrier means (28) on which a slice of bread (30) may be carried. The carrier means (28) which is movable by an exterior lever (48) between an rest position and an operative position and being movable in the opposite direction by spring biassing means and then being movable to an upper position by the lever (48). Pivotally mounted the carrier means is a lifter (60,82) that is moveable, when the carrier (28) is moved into the upper position, upwardly of the carrier to raise a slice of bread on the carrier means upwardly of the carrier.

## Description

Pop-up toasters comprise a casing having one or more but usually a pair of feed openings in its upper surface. Within the casing is an operating unit consisting of as many carriers as feed openings which carriers are located between toasting elements that normally comprise a mica or other insulated plate around which wire is wound. Each carrier when in the rest position receives a slice of bread introduce through the feed opening. It, the carrier, is moved by means of a manually operable connecter lever from the rest position to a lower operating position against the bias of a spring. When in the operating position, the carrier is held in position by a latch that is normally time operated. The toasting elements are now actuated. After the time period expires, the latch releases the carrier. The carrier then returns to its rest position with the slice of bread thereon. Normally the slice of bread will now project out of the feed opening and can easily be removed.

However certain breads are baked to be somewhat less high than usual. It is often difficult to remove a slice of such bread because it may not project through the feed opening.

According to one aspect of the invention there is provided a pop-up toaster incorporating a carrier means on which a slice of bread may be carried, the carrier means including a carrier movable by an exterior lever between an rest position and an operative position and being movable in the opposite direction by biassing means, the carrier being further movable into an upper position above the rest position, preferably by the external lever; and the carrier means further comprising a lifter connected to the carrier and being moveable by when the carrier is moved into the upper position to move upwardly of the carrier to raise a slice of bread on the carrier means upwardly of the carrier.

The lifter is preferably pivotally connected to the carrier so that when the carrier is in the upper position, the lifter will be upwardly inclined relative to the carrier.

A fixed stop member is preferably provided on a part of the toaster and the lifter comprises a main arm to lift a slice of bread, a pivot and an extension on the opposite side of the pivot, the arrangement being such that when the carrier is in the upper position, the said extension engages the bracket and is depressed thereby. The main arm is preferably provided with a pair of guides between which the carrier is movably received to retain the lifter against unwanted movement.

An embodiment of the invention will now be described by way of example with reference to the accompanying drawings.

In the drawings:-
Figure 1 is a perspective view partially broken away of a pop-up toaster of the invention,

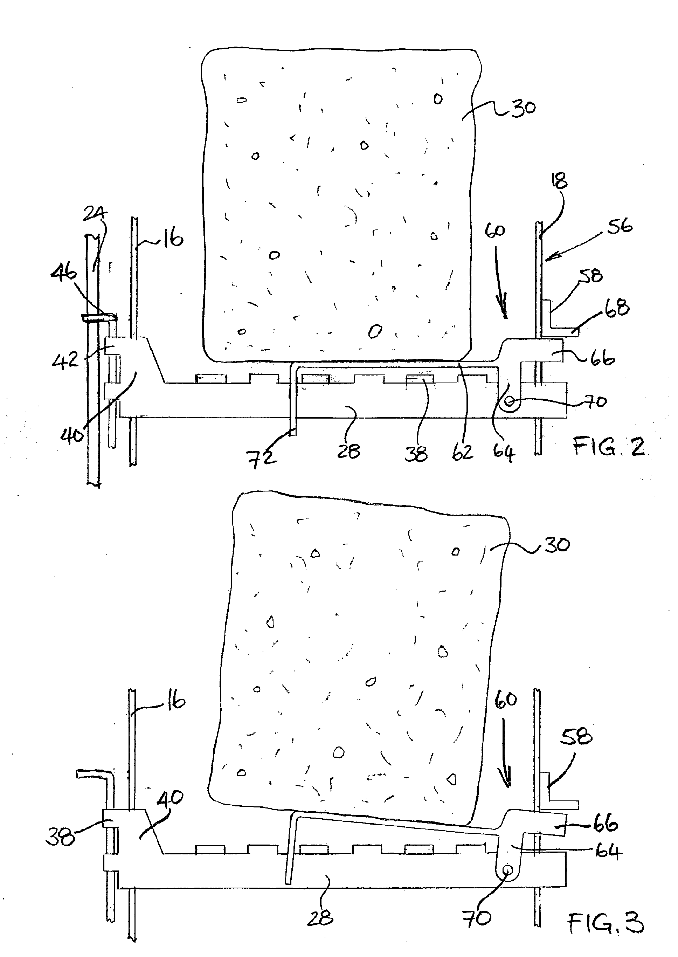

Figure 2 is a detail section of the interior of the toaster showing the carrier in its rest position,
Figure 3 is a view similar to Figure 2 showing the lifter operated, and
Figure 4 is a detail perspective view partially broken away of a modified toaster of the invention.

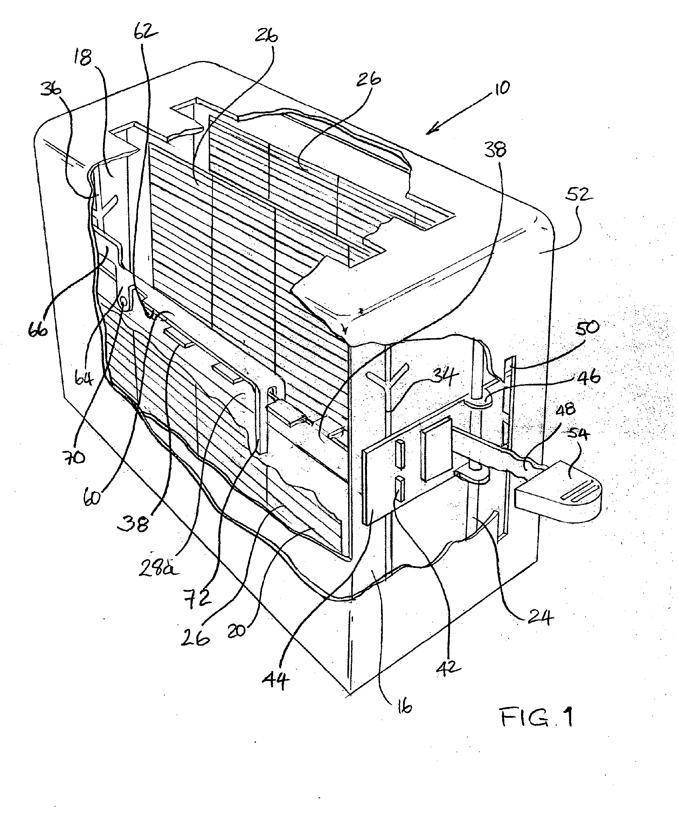

Referring now to Figure 1 there is shown a pop toaster of the invention. The toaster has an aesthetically pleasing casing 10 with a pair of feed openings 12 in its upper surface 14 through which slices of bread can be introduced into the toaster.

The toaster includes an operating unit located within the case and comprising an inner housing consisting of at least a front wall 16, a rear wall 18 and two side walls 20. An outwardly directed flange(not shown) is provided from the upper edge of the front wall 16 and this supports a vertical guide rod 24. Within the housing 14 are three spaced vertical toasting elements 26. Between the elements 26 are two carrier units 28 for slices of bread 30. Each carrier unit 28 consists of a narrow vertical carrier plate 28a, the ends 30 and 32 of which are slidable in vertical slots 34 and 36 in the front and rear walls 16 and 18. The carrier plate 28a has spaced ears 38 bent over on each side to provide a sufficiently wide carrier for the bread 30. The front end 40 of each carrier is enlarged and has on its front face a pair of vertical ears 42.

A vertical guide plate 44 is provided to slide beside the outside face of the front wall 16. The plate 44 has a pair of outwardly bent lugs 46 at the centre of its upper and lower edges. These lugs 46 have aligned openings through which the guide rod 24 passes to guide the guide plate 44 for vertical movement. The ears 42 are received within slots in the guide plate 44. A vertical connector arm 48 extends from the guide plate 44 through a slot 50 in the casing 52 of the toaster and has an operating button 54 at its end located outside casing 52. The connector arm 48 enables the guide plate 44 to be moved up and down by a user as will be described.

The carrier units 28 are movable between a rest position (as shown in the drawings) and a lower operating position, being biassed upwardly by spring means into the rest position. A switch is provided which is operated when the carrier units are in the operating position to enable power to be supplied to the toasting elements 26. Further there is a timer controlled latch to hold the carrier units in the operative position. The parts described in this paragraph are conventional and are not illustrated (other than the carriers 24 and elements 36).

The carrier unit 28 is further capable of being moved manually upwardly from the rest position to an upper position by means of the connector arm 48.

On the outside face 56 of the rear wall 18 and above each guide slots 36 is a fixed stop in the form of an angle shaped bracket 58.

Each carrier unit 28 further comprises a lifter 60. The lifter 60 comprises a narrow horizontal lifter plate 62 which lies over the ears 38 of the carrier plate 28a. At its rear end, the lifter plate 62 has a downwardly dependant vertical lug 64 and a rear vertical extension 66 on the opposite side of the lug. The extension 66 passes through the slot 36 and lies beneath the horizontal arm 68 of the bracket 58.

The lifter plate 62 is connected to the carrier plate 28a by means of a pivot pin 70 which passes through the lug 64 and the carrier 28. A pair of guide legs 72 extend downwardly from the front end of the lifter plate 62 to lie on either side of the carrier plate 28a as a guide for the lifter 60 to prevent it making unwanted sideways movements.

In use and when the carrier unit 28 is in the rest position, the lifter 60 rests on the upper surface of the associated carrier 28. A slice of bread 30 to be toasted is introduced into the casing through a feed opening 12. It is then supported over part of its length by the lifter plate 62 and the remainder by the carrier plate 28. (In the drawings, the lifter is shown spaced from the carrier but this is only for the purposes of clarity).

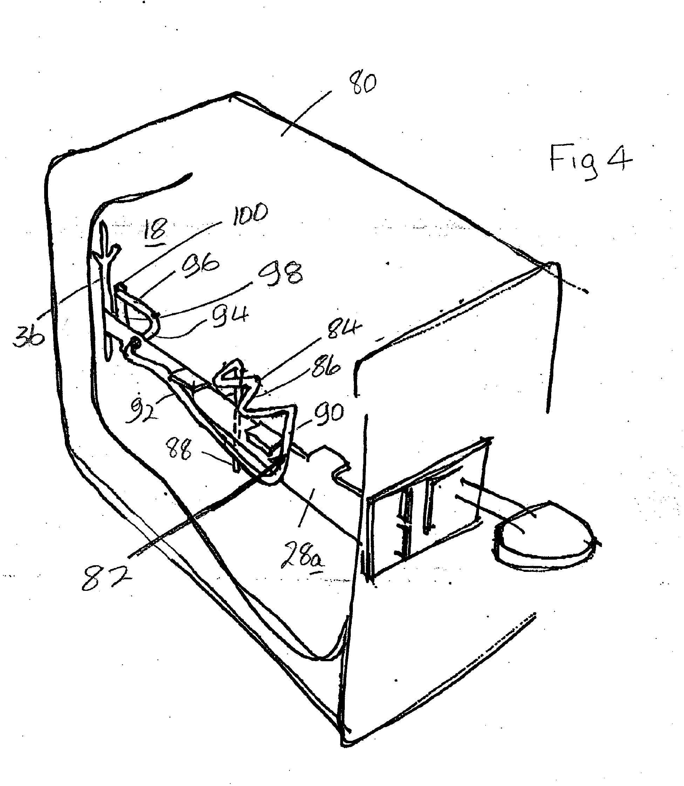

When the time operated latch operates to release the carrier 28, the spring will lift the carrier 28 towards its rest position. If the slice of bread is the normal size it will project through the feed opening 12 and can be easily removed by hand. If however the bread is less high than the normal size it will not so project. The connection arm 48 is now moved to lift the carrier unit 28 to its upper position. During such movement of the carrier 60 the upper edge 74 of the extension of the lifter 60 engages the bracket 58. Further movement of the carrier 28 will cause the lifter 60 to be tilted upwardly about the pivot pin 70 into the position shown in Figure 3. This upward movement of the lifter 60 will lift the slice of bread 30 so that its upper corner 76 will be a few centimetres above the position at which it would take at the completion of the upward movement of the carrier 28 and were there to be no lifter provided. This will have the effect that this corner projects through the feed openings 12 in the upper surface 14 of the toaster casing even if the slice is relatively narrow.

Further upward movement of the carrier 28 will cause the lifter arm 62 to pivot still further than as shown in Figure 3.

After the slice of bread is removed from the toaster, the connector arm 48 is released and the carrier returns by gravity to the rest position.

Reference is now made to Figure 4 wherein is shown a toaster 80 with a modified lifter 82. This lifter 82 comprises a robust wire. The wire comprises a support portion 84 formed by a series of "V"-shaped bends 86 overlying the carrier plate 28a to support the slice of toast. At the end of the wire there is a portion 88 bent down to lie beside the plate 28a. At the inner end of the bends 86, the wire is bent down to form a portion 90 lying on the opposite side of the plate 28a and this leads to a longitudinal section 92. The section 92 lies well below the ears 38 and then is bent to form a transverse pivot portion 94 which passes through an opening in the carrier plate 28a. The lifter has an extension piece 96 from the pivot portion. The rear wall 18 has a slot 98 running parallel to the slot 36. The extension piece 96 passes through this slot 98. The disposition of the slot 98 is such that when the carrier is in the rest position, the extension piece 96 engages the upper end 100 of the slot 98. On further upward movement of the carrier, the extension piece 96 engaging the end 100 causes the lifter 82 to pivot upwardly as described above.

The invention is not limited to the precise constructional details hereinbefore described and illustrated in the drawings. The shape of the toaster casing may differ and the connector may pass through a slot in a side face of the casing. The length of the lifter may vary. The shape of the wire lifter 82 may vary. The stop 58 in the first embodiment may be omitted and the upper edge of the slot through which the extension 64 passes may act as the stop as described with reference to the second embodiment.

## Claims

1. A pop-up toaster incorporating a carrier means (28) on which a slice of bread (30) may be carried, the carrier means including
a carrier (28a) movable by an exterior lever (48) between an rest position and an operative position and being movable in the opposite direction by biassing means, the carrier means being further movable into an upper position above the rest position,
**characterised in that** the carrier means (28) further comprises a lifter (60, 82) connected to the carrier (at 70) and being moveable, when the carrier (28a) is moved into the upper position, to move upwardly of the carrier (28a) to raise a slice of bread (30) on the carrier means upwardly of the carrier.

2. A toaster as claimed in claim 1 **characterised in that** the lifter (60, 82) is pivotally connected to the carrier (28a) so that when the carrier is in the upper position, the lifter will be upwardly inclined relative to the carrier.

3. A toaster as claimed in claim 2 **characterised in that** there is provided a fixed stop member (58, and **in that** the lifter (60, 82) comprises a main arm (62, 84) to lift a slice of bread (30), a pivot connection (70, 94) and an extension (66, 96) on the opposite side of the pivot, the arrangement being such that when the carrier is in the upper position, the said extension (66, 96) engages the stop member 58, 100) and is depressed thereby to pivot the main arm upwardly.

4. A toaster as claimed in claim 2 **characterised in that** the extension (96) is movable within a slot (98) in a wall at the rear of the toaster, and **in that** the upper edge (100) of the slot (98) constitutes the stop means.

5. A toaster as claimed in any one of the preceding claims **characterised in that** the lifter (60, 82) is provided with a pair of guides (72, 88 and 90) between which the carrier (28a) is movably received to retain the lifter against unwanted movement.

6. A toaster as claimed in any one of the preceding claims **characterised in that** the lifter (60, 82) is formed from a length of stout wire.

7. A toaster as claimed in any one of the preceding claims **characterised in that** the lever (48) is arranged to lift the carrier (28a) into the upper position.
